# FASCICULE DE BREVET EUROPEEN

(11) **EP 3 261 817 B1**
(45) Date de publication et mention de la délivrance du brevet: **03.04.2019**
(21) Numéro de dépôt: 16714966.5
(22) Date de dépôt: 19.02.2016
(51) Int. Cl.: B29C 51/16, B29C 51/20

(54) **DISPOSITIF DE THERMOFORMAGE DE RÉCIPIENTS A BLOCS DE MOULES TRANSLATIFS ET PROCÉDÉ**
VORRICHTUNG ZUM THERMOFORMEN VON BEHÄLTERN MIT TRANSLATIONALEN FORMBLÖCKEN UND VERFAHREN
DEVICE FOR THERMOFORMING CONTAINERS HAVING TRANSLATIONAL MOULD BLOCKS AND PROCESS

(30) Priorité: 27.02.2015 FR 1551678
(43) Date de publication de la demande: 03.01.2018
(73) Titulaire: ERCA, 91940 Les Ulis (FR)
(72) Inventeur: LE METAYER, Sébastien, 14190 Saint Germain Le Vasson (FR)
(74) Mandataire: Intès, Didier Gérard André
(86) Numéro de dépôt international: PCT/FR2016/050386
(87) Numéro de publication internationale: WO 2016/135398

(56) Documents cités:
- EP-A2- 1 090 735
- DE-A1-102004 023 582

## Description

La présente invention concerne un dispositif et un procédé pour fabriquer par thermoformage des récipients pourvus d'étiquettes de décor.

La demande de brevet EP 1 090 735 divulgue un dispositif et un procédé pour thermoformer des récipients dans une bande de matériau thermoplastique avancée en pas à pas. Ce dispositif comprend deux blocs de moule, un contre-moule et deux blocs d'introduction de banderoles de décor. Les deux blocs de moule sont déplaçables verticalement entre un niveau de thermoformage et un niveau de dégagement et sont également déplaçables horizontalement dans la direction d'avancement de la bande de matériau thermoplastique de manière à ce qu'un bloc de moule soit en position de thermoformage, sous le contre-moule, tandis que l'autre est en position de décor sous un bloc d'introduction de banderoles de décor. Les blocs d'introduction de banderoles de décor sont déplaçables transversalement à la direction d'avancement de la bande pour être dégagés de la bande de manière à permettre la mise en place de banderoles de décor dans ces blocs, et être ramenés sous la bande, en regard des chambres de thermoformage du moule en position de décor, de manière à introduire les banderoles de décor dans les chambres de ce bloc de moule.

Lors du thermoformage, le bloc de moule en position de thermoformage est au niveau de thermoformage, tandis que l'autre bloc de moule, qui est en position de décor, est au niveau de dégagement. Le fonctionnement est le suivant :
- on thermoforme des récipients dans le premier bloc de moule en position de thermoformage au niveau de thermoformage et on place des banderoles de décor dans le deuxième bloc de moule en position de décor au niveau de dégagement, par le deuxième bloc d'introduction de banderoles de décor qui est alors sous la bande thermoplastique tandis que le premier bloc d'introduction de banderoles de décor en est écarté ;
- on amène le premier bloc de moule au niveau de dégagement ;
- on déplace les deux blocs de moule qui sont alors au niveau de dégagement pour placer le deuxième bloc de moule en position de thermoformage et le premier bloc de moule en position de décor ;
- on écarte le deuxième bloc d'introduction de banderoles de décor par rapport à la bande et on ramène le premier bloc d'introduction de banderoles de décor sous la bande ;
- on monte le deuxième bloc de moule au niveau de thermoformage pour y thermoformer des récipients, tout en plaçant des banderoles de décor dans le premier bloc de moule par le premier bloc d'introduction de banderoles de décor qui est alors sous la bande thermoplastique alors que le deuxième en est écarté.

La cinématique est donc compliquée et le niveau de dégagement doit être suffisamment éloigné du niveau de thermoformage pour permettre non seulement le démoulage des récipients thermoformés dans l'un des blocs de moule, mais encore l'introduction de banderoles de décor dans l'autre bloc de moule en tenant compte de l'encombrement du bloc d'introduction de banderoles de décor utilisé pour introduire les banderoles dans cet autre bloc de moule.

On connaît en outre, par la demande de brevet EP 1 836 040, un dispositif et un procédé pour thermoformer des récipients dans une bande de matériau thermoplastique, utilisant un ensemble de moule rotatif, comprenant plusieurs blocs de moule qui adoptent successivement une position orientée verticalement pour permettre le thermoformage du récipient et une position orientée latéralement pour permettre la mise en place d'étiquettes dans les chambres de thermoformage et un ou plusieurs blocs d'introduction d'étiquettes dans les blocs de moule. Ce système apporte satisfaction en ce qu'il permet des cadences de production élevées. Cependant, le fait de devoir entraîner l'ensemble de moule en rotation en plus de le déplacer verticalement pour permettre le thermoformage et le démoulage des récipients, nécessite une structure relativement lourde. De plus, les blocs d'introduction doivent être spécialement conçus pour la mise en place des étiquettes dans les positions orientées latéralement des blocs de moule, ce qui peut complexifier la structure des blocs d'introduction d'étiquettes. Enfin, le ou les blocs d'introduction sont nécessairement placés sous le plan d'avancement de la bande de matériau thermoplastique et, en particulier, sous la station de chauffage, ce qui les rend difficiles d'accès, limite leur taille et complexifie leur maintenance.
EP1090735 A2 divulgue un dispositif et un procédé selon les préambules des revendications 1 et 12.

L'invention vise à proposer un dispositif dont la cinématique soit simple et qui permette des cadences de production élevées, tout en étant compatible avec des blocs d'étiquetage classique.

Ainsi, l'invention concerne un dispositif pour fabriquer par thermoformage des récipients pourvus d'étiquettes de décor, le dispositif comprenant :
- un dispositif de moule comprenant au moins un premier et un deuxième bloc de moule analogues,
- un contre-moule,
- des moyens pour faire avancer un matériau thermoplastique dans une direction d'avancement et amener le matériau thermoplastique en regard du contre-moule, dans un plan de thermoformage défini par la direction d'avancement et par une direction transversale,
- deux blocs d'étiquetage,
le dispositif de moule étant placé de l'autre côté du plan de thermoformage par rapport au contre-moule et étant configuré pour que les blocs de moule puissent alternativement adopter une première configuration dans laquelle le premier bloc de moule occupe une position de thermoformage en regard du contre-moule alors que le deuxième bloc de moule occupe une position d'étiquetage en regard de l'un des blocs d'étiquetage et une deuxième configuration dans laquelle le deuxième bloc de moule occupe la position de thermoformage alors que le premier bloc de moule occupe une position d'étiquetage en regard de l'autre des blocs d'étiquetage,
les blocs d'étiquetage étant disposés de part et d'autre du contre-moule selon la direction transversale,
les premier et deuxième blocs de moule formant un ensemble apte à être déplacé selon un premier déplacement opéré perpendiculairement au plan de thermoformage entre un niveau de thermoformage proche dudit plan et un niveau de dégagement éloigné dudit plan, et selon un deuxième déplacement opéré dans la direction transversale pour placer alternativement les blocs de moule en regard du contre-moule et de l'un des blocs d'étiquetage.

La cinématique du dispositif de moule est simple, puisqu'il est simplement déplacé comme un tout entre le niveau de thermoformage et le niveau de dégagement, qui permet notamment le démoulage des récipients, et que les premier et deuxième blocs de moule sont également déplacés comme un tout selon le deuxième déplacement pour placer alternativement ces blocs de moule en regard du contre-moule et de l'un des blocs d'étiquetage. Par ailleurs, les blocs de moule sont orientés de la même façon pour l'étiquetage et le thermoformage, ce qui permet l'utilisation de blocs d'étiquetages classique, avec des moyens courants d'acheminement des étiquettes, en particulier des banderoles de décor dans lesquelles sont formées ces étiquettes. Enfin, en position d'étiquetage, les blocs de moule sont écartés du trajet d'avancement du matériau thermoplastique et n'interfèrent donc pas avec les différentes stations de fabrication des récipients, ce qui évite les problèmes d'encombrement limité et simplifie leur maintenance.

Optionnellement, le dispositif de moule comprend en outre un troisième et un quatrième bloc de moule analogues formant un ensemble parallèle à l'ensemble formé par les premier et deuxième blocs de moule, le contre-moule présente deux parties de contre-moulage parallèles correspondant, chacune à un bloc de moule, et les premier, deuxième, troisième et quatrième blocs de moule sont aptes à être déplacés ensemble selon le premier déplacement et à être déplacés simultanément lors du deuxième déplacement, ledit deuxième déplacement étant opéré en sens inverse pour l'ensemble formé par les premier et deuxième blocs de moule et pour l'ensemble formé par les troisième et quatrième blocs de moule.

Dans ce cas, les cadences de production sont augmentées car on thermoforme simultanément les récipients dans deux blocs de moule, de même que l'on met en place simultanément des étiquettes dans deux blocs de moule. La cinématique reste simple, puisque les quatre blocs de moule sont déplacés ensemble entre le niveau de thermoformage et le niveau de dégagement, alors que les deux ensembles comprenant respectivement les premier et deuxième blocs de moule et les troisième et quatrième blocs de moule sont simplement déplacés en translation, en va-et-vient.

Optionnellement, les blocs d'étiquetage sont aptes à être déplacés selon un troisième déplacement parallèle à la direction d'avancement en synchronisation avec les déplacements des blocs de moule, de manière à être alternativement dans le prolongement de la première partie de contre-moulage et dans le prolongement de la deuxième partie de contre-moulage.

Le troisième déplacement est un simple déplacement en translation, de mise en oeuvre aisée. Il peut aisément être synchronisé avec les autres déplacements et les opérations de thermoformage et de mise en place des étiquettes.

Optionnellement, dans la première configuration des blocs de moule, le premier bloc de moule est en position de thermoformage en regard de la première partie de contre-moulage, le deuxième bloc de moule est en position d'étiquetage en regard du premier bloc d'étiquetage, le troisième bloc de moule est en position de thermoformage en regard de la deuxième partie de contre-moulage et le quatrième bloc de moule est en position d'étiquetage en regard du deuxième bloc d'étiquetage, tandis que, dans la deuxième configuration des blocs de moule, le premier bloc de moule est en position d'étiquetage en regard du deuxième bloc d'étiquetage, le deuxième bloc de moule est en position de thermoformage en regard de la première partie de contre-moulage, le troisième bloc de moule est en position d'étiquetage en regard du premier bloc d'étiquetage, et le quatrième bloc de moule est en position de thermoformage en regard de la deuxième partie de contre-moulage.

Ainsi, le thermoformage dans deux blocs de moule peut être réalisé en temps masqué, pendant l'étiquetage dans deux autres blocs de moule.

Optionnellement, le dispositif est configuré pour déplacer les blocs d'étiquetage selon le troisième déplacement pendant le premier déplacement des blocs de moule du niveau de thermoformage vers le niveau de dégagement.

Ainsi, le déplacement des blocs d'étiquetage est réalisé après un thermoformage, alors que les blocs de moule sont déplacés vers le niveau de dégagement, c'est-à-dire qu'il est réalisé en temps masqué et que les blocs d'étiquetage sont déjà en position d'attente lorsque les blocs de moule reviennent au niveau de thermoformage, pour réaliser l'étiquetage dans les blocs de moule qui viennent de servir au thermoformage et qui sont maintenant en regard des blocs d'étiquetage en position d'attente.

Optionnellement, chaque bloc de moule présente deux rangées de chambres de thermoformage orientées selon la direction transversale et chaque bloc d'étiquetage présente deux rangées correspondantes de zones de mise en place d'étiquettes.

Ainsi, chaque bloc d'étiquetage achemine les étiquettes depuis ses zones de mise en place d'étiquettes, vers les chambres de thermoformage en correspondance avec ces zones, en particulier en regard desdites zones, de sorte que les moyens d'acheminement peuvent être simples et peu encombrants.

Optionnellement, le dispositif comprend un support commun déplaçable en translation perpendiculairement au plan de thermoformage, les blocs de moule étant portés par le support commun via des moyens de coulissement configurés pour faire coulisser lesdits blocs dans la direction transversale.

Optionnellement, chaque bloc d'étiquetage comprend des zones de préparation et de découpe d'étiquettes pour recevoir des étiquettes découpées dans des bandelettes amenées dans lesdites zones, le dispositif comprend, pour chaque bandelette, au moins une poulie d'entraînement pour amener l'extrémité de la bandelette dans une zone de préparation et de découpe d'étiquettes et une poulie de tension pour mettre la bandelette en tension, et le dispositif est configuré pour que, lors du déplacement du bloc d'étiquetage selon le troisième déplacement, la poulie d'entrainement se déplace avec le bloc d'étiquetage et la poulie de tension et la poulie d'entraînement se déplacent l'une par rapport à l'autre.

Optionnellement, la poulie de tension coopère avec une came.

L'invention concerne également un procédé pour fabriquer par thermoformage des récipients pourvus d'étiquettes de décor, le procédé comprenant les étapes suivantes :
- on fait avancer un matériau thermoplastique dans une direction d'avancement et on amène le matériau thermoplastique en regard d'un contre-moule dans un plan de thermoformage défini par la direction d'avancement et par une direction transversale,
- on dispose alternativement deux blocs de moule analogues d'un dispositif de moule placé de l'autre côté du plan de thermoformage par rapport au contre-moule, dans une première configuration dans laquelle le premier bloc de moule occupe une position de thermoformage en regard du contre-moule alors que le deuxième bloc de moule occupe une position d'étiquetage en regard d'un bloc d'étiquetage, et dans une deuxième configuration dans laquelle le deuxième bloc de moule occupe la position de thermoformage alors que le premier bloc de moule occupe une position d'étiquetage en regard d'un autre bloc d'étiquetage,
- les blocs d'étiquetage étant disposés de part et d'autre du contre-moule selon la direction transversale, on passe de l'une à l'autre des première et deuxième configurations en déplaçant ensemble les premier et deuxième blocs de moule selon un premier déplacement opéré perpendiculairement au plan de thermoformage entre un niveau de thermoformage proche dudit plan et un niveau de dégagement éloigné dudit plan, et selon un deuxième déplacement opéré dans la direction transversale pour placer alternativement les blocs de moule en regard du contre-moule et de l'un des blocs d'étiquetage.

Comme indiqué précédemment à l'égard du dispositif de l'invention, le procédé permet l'obtention de cadences élevées, avec des cinématiques de déplacement des blocs de moule qui sont simples, les premiers et deuxième blocs de moule étant déplacés ensemble entre les niveaux de thermoformage et le dégagement, et étant également déplacés ensemble selon le deuxième déplacement. De plus, les blocs de moule sont dans la même orientation pour le thermoformage et l'étiquetage, ce qui permet d'utiliser des blocs d'étiquetage de configuration classique. En outre, les blocs d'étiquetage peuvent être décalés du trajet d'avancement du matériau thermoplastique.

Optionnellement, le contre-moule présentant deux parties de contre-moulage correspondant chacune à un bloc de moule, on opère le premier déplacement en déplaçant les premier et deuxième blocs de moule ensemble avec un troisième et un quatrième bloc de moule analogues pour amener ensemble les quatre blocs de moule au niveau de thermoformage ou au niveau de dégagement et on opère le deuxième déplacement en déplaçant ensemble les premier et deuxième blocs de moule dans un sens et en déplaçant ensemble les troisième et quatrième blocs de moule en sens inverse.

Optionnellement, on déplace les blocs d'étiquetage selon un troisième déplacement parallèle à la direction d'avancement, de sorte que chaque bloc d'étiquetage se trouve alternativement dans le prolongement de l'une ou de l'autre des parties de contre-moulage.

Optionnellement, dans la première configuration des blocs de moule, on thermoforme des récipients dans les premier et troisième blocs de moule en position de thermoformage respectivement en regard de la première et de la deuxième partie de contre-moulage, et on met en place des étiquettes dans les deuxième et quatrième blocs de moule respectivement en regard du premier et du deuxième bloc d'étiquetage, tandis que, dans la deuxième configuration des blocs de moule, on thermoforme des récipients dans les deuxième et quatrième blocs de moule en position de thermoformage respectivement en regard de la première et de la deuxième partie de contre-moulage, et on met en place des étiquettes dans les premier et troisième blocs de moule respectivement en regard du deuxième et du premier bloc d'étiquetage.

Optionnellement, on met en place des étiquettes dans les blocs de moule situés en regard des blocs d'étiquetage en même temps que l'on réalise le thermoformage dans les blocs de moules situés en regard du contre-moule alors que les quatre blocs de moule sont au niveau de thermoformage, et on déplace les blocs d'étiquetage selon le troisième déplacement pendant que l'on déplace les quatre blocs de moule selon le premier déplacement, du niveau de thermoformage vers le niveau de dégagement.

Optionnellement, chaque bloc de moule présentant deux rangées de chambres de thermoformage orientées selon la direction transversale et chaque bloc d'étiquetage présentant deux rangées correspondantes de zones de préparation d'étiquettes, on réalise simultanément le thermoformage des récipients dans les chambres des blocs de moule situées en regard du contre-moule et la mise en place d'étiquettes dans les chambres des blocs de moules situées en regard des zones de préparation d'étiquettes, alors que les quatre blocs de moule sont au niveau de thermoformage.

Optionnellement, on amène et on découpe des extrémités de bandelettes dans des zones de préparation et de découpe d'étiquettes des blocs d'étiquetage pour former des étiquettes dans lesdites zones et, lors du déplacement des blocs d'étiquetage selon le troisième déplacement, on maintient la tension des bandelettes à l'aide de poulies de tension que l'on déplace par rapport à ces blocs.

Optionnellement, on amène les extrémités des bandelettes dans les zones de préparation et de découpe d'étiquettes de chaque bloc d'étiquetage en utilisant, pour chaque bandelette, au moins une poulie d'entrainement et une poulie de tension et, lors du déplacement du bloc d'étiquetage selon le troisième déplacement, on déplace la poulie d'entrainement et la poulie de tension l'une par rapport à l'autre.

L'invention sera bien comprise et ses avantages apparaîtront mieux à la lecture de la description détaillée qui suit, d'un mode de réalisation représenté à titre d'exemple non limitatif. La description se réfère aux dessins annexés sur lesquels :
- la figure 1 est une vue schématique de côté d'une installation mettant en oeuvre le dispositif selon l'invention ;
- la figure 2 est une vue partielle de dessus, prise selon la flèche II de la figure 1, montrant le dispositif de moule ;
- la figure 3 est une vue de côté en perspective, prise selon la flèche III de la figure 2, montrant le dispositif de moule et les blocs d'étiquetage ;
- les figures 4A et 4B sont deux vues prises selon la flèche IV de la figure 3, montrant le dispositif de moule et les blocs d'étiquetage, le dispositif étant au niveau de dégagement sur la figure 4A et au niveau de thermoformage sur la figure 4B ;
- la figure 5 est une vue partielle en coupe d'un bloc d'étiquetage ;
- les figures 6A, 6B et 6C sont trois vues de dessus montrant le dispositif de moule et les blocs d'étiquetage dans trois phases successives ;
- la figure 7 est une vue schématique en section dans le plan VII de la figure 1, montrant une possibilité pour le système d'entraînement des blocs de moule selon le deuxième déplacement.

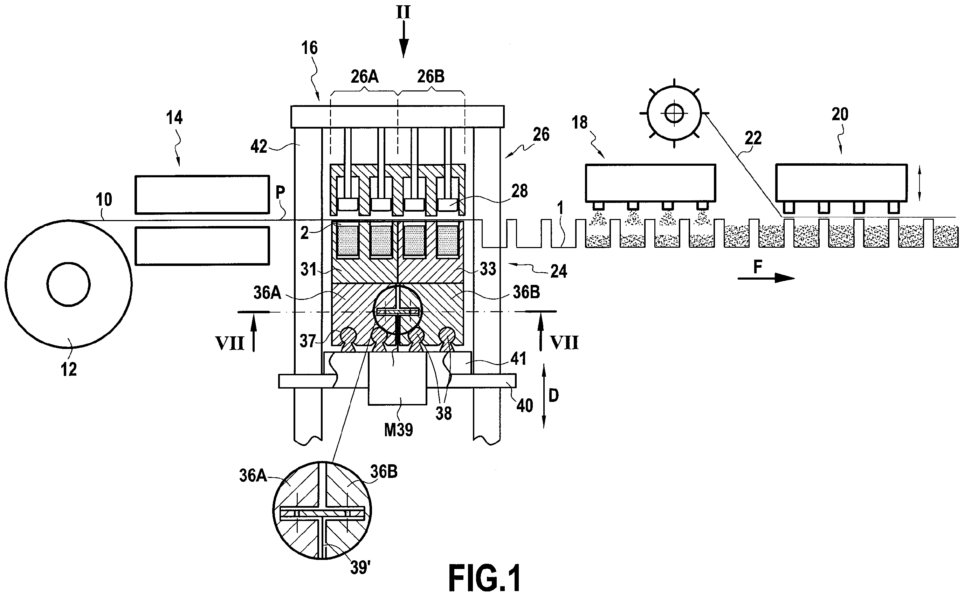

On décrit tout d'abord la figure 1 qui montre schématiquement une installation utilisant le dispositif de l'invention et mettant en oeuvre le procédé de l'invention.

Cette installation comprend plusieurs stations au travers desquelles est entraîné en pas à pas une bande 10 du matériau thermoplastique, par des moyens d'entraînement (non représentés). En effet, dans le cas représenté à titre d'exemple, les récipients sont thermoformés à partir d'un matériau thermoplastique en forme de bande. Bien entendu, cette bande pourrait être remplacée par des jetons individuels ou des plaquettes dans lesquels les récipients pourraient être thermoformés individuellement ou par groupes, ces jetons ou ces plaquettes étant, comme la bande, entraînés en pas à pas dans le sens d'avancement F.

Considérée successivement dans le sens F d'avancement de la bande, l'installation comprend une station 14 de chauffage, une station 16 de thermoformage, une station 18 de remplissage des récipients thermoformés 1 et une station 20 de fermeture de ces récipients 1, par exemple une station de scellement d'une bande de fermeture 22 au travers des ouvertures des récipients 1.

La station de thermoformage 16 comprend un dispositif de moule 24 comprenant plusieurs blocs de moule analogues, ainsi qu'il sera décrit. La station de thermoformage comprend également un contre-moule 26 qui comprend des pistons 28 de thermoformage déplaçables dans les chambres de thermoformage 2 du dispositif de moule pour y repousser le matériau thermoplastique préalablement chauffé dans la station de chauffage 14. En l'espèce, la direction F d'avancement de la bande thermoplastique est horizontale, le dispositif de moule 24 est disposé sous la bande thermoplastique, et le contre-moule 26 est disposé au-dessus de cette bande. Ainsi, les pistons 28 se déplacent verticalement en va-et-vient, vers le bas pour repousser la matière thermoplastique et vers le haut pour échapper aux chambres du dispositif de moule. On pourrait bien entendu imaginer une autre disposition, par exemple une disposition inverse, avec le contre-moule disposé sous la bande et le dispositif de moule disposé au-dessus de la bande.

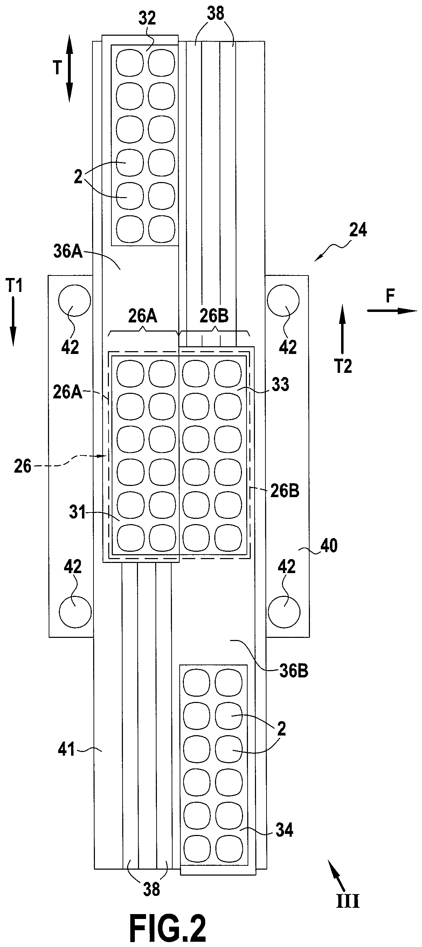

On décrit maintenant la figure 2 qui montre schématiquement un dispositif de moule en vue de dessus. On voit que ce dispositif comprend un premier bloc de moule 31, un deuxième bloc de moule 32, un troisième bloc de moule 33 et un quatrième moule de bloc 34 qui sont analogues. Chacun de ces blocs de moule comprend un nombre identique de chambres de thermoformage 2, disposées de la même manière. En l'espèce, chaque bloc de moule présente deux rangées de chambres de thermoformage qui sont orientées selon la direction transversale T, la direction d'avancement de la bande étant indiquée par la flèche F sur la figure 2. En l'espèce, la direction transversale T est perpendiculaire à la direction d'avancement F. Les directions F et T définissent un plan horizontal P, indiqué sur la figure 1, qui est le plan d'avancement de la bande 10 dans la station 16 de thermoformage et qui, en d'autres termes, est le plan du thermoformage.

De plus, le dispositif de l'invention comprend des blocs d'introduction d'étiquettes, qui ne sont pas représentés sur la figure 2 et qui seront décrits dans la suite.

Sur la figure 2, seul le dispositif de moule est représenté en trait plein, la position du contre-moule 26 étant simplement figurée en trait interrompu. La figure 2 montre le dispositif de moule dans une première configuration dans laquelle les premier et troisième blocs de moule 31 et 33 sont en position de thermoformage, en regard du contre-moule 26, alors que les deuxième et quatrième blocs de moule 32, 34 sont en position d'étiquetage en étant rendus accessibles aux blocs d'étiquetage qui seront décrits dans la suite. On comprend que, par un déplacement de l'ensemble formé par les premier et deuxième blocs de moule 31, 32 selon la direction transversale T dans le sens indiqué par la flèche T1, et par un déplacement de l'ensemble formé par les troisième et quatrième blocs de moule 33 et 34 selon la direction transversale T, dans le sens indiqué par la flèche T2 opposée à celui de la flèche T1, on inverse la situation en disposant cette fois les deuxième et quatrième blocs de moule 32, 34 en regard du contre-moule 26, et en rendant alors les premier et troisième blocs de moule 31 et 33 accessibles aux blocs d'étiquetage. Ceci correspond à une deuxième configuration.

Plus précisément, bien que pouvant être conformé en un seul bloc, le contre-moule 26 comprend deux parties de contre-moulage, respectivement repérées par les références 26A et 26B, qui sont parallèles et orientées selon la direction transversale T. Sur la figure 2, le premier bloc de moule 31 est en regard de la première partie du contre-moulage 26A, et le troisième bloc de moule 33 est en regard dans la deuxième partie de contre-moulage 26B. Par les déplacements dans le sens T1 et T2 évoqués précédemment, on place les deuxième et quatrième blocs de moule 32 et 34 en regard de, respectivement, les parties de contre-moulage 26A et 26B. En résumé, chacun des deux ensembles respectivement formés par les premier et deuxième blocs de moule 31 et 32 et par les troisième et quatrième blocs de moule 33 et 34 est déplaçable en va-et-vient dans les sens T1 et T2 pour respectivement placer les blocs de moule en regard du contre-moule 26.

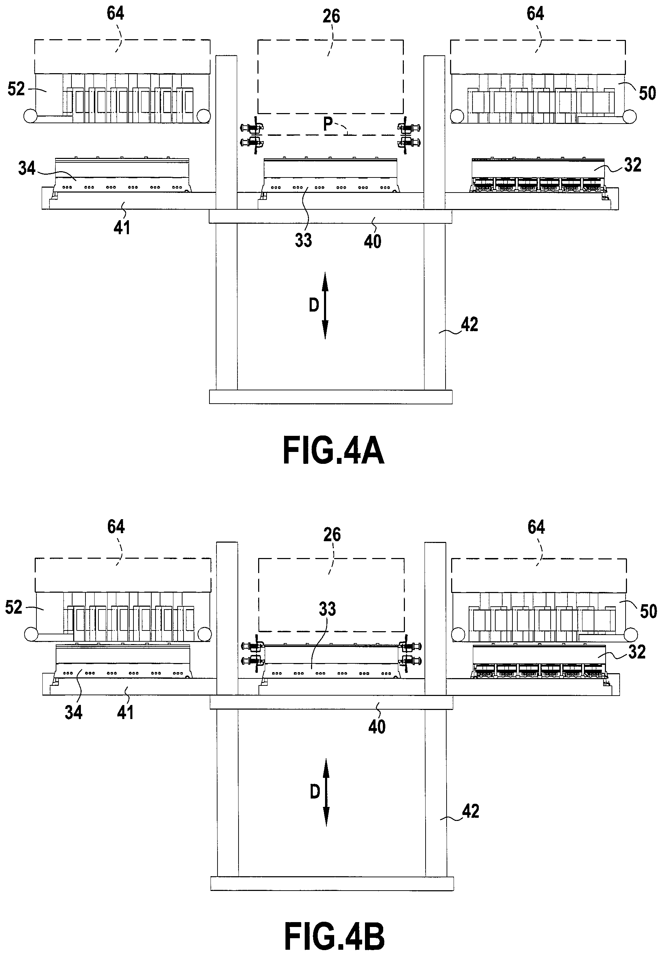

Sur les figures 1, 4A et 4B, on comprend que les blocs de moule sont par ailleurs déplaçables en va-et-vient comme indiqué par la double flèche verticale D entre un niveau de thermoformage (figure 4B), dans lequel les blocs de moule peuvent coopérer avec le contre-moule pour thermoformer des récipients dans la bande 10 et un niveau de dégagement (figure 4A), dans lequel les blocs de moule sont dégagés vers le bas pour que les récipients thermoformés échappent aux chambres 2, et permettre ainsi l'avancement de la bande 10.

Dans le mode de réalisation représenté, le dispositif de moule comprend quatre blocs de moule analogues. Cependant, comme indiqué précédemment, il pourrait ne comprendre que deux blocs de moule analogues formant un ensemble aligné selon la direction transversale T, par exemple les premier et deuxième blocs de moule 31 et 32. Selon l'invention, cet ensemble est déplacé comme un tout selon la flèche D entre le niveau thermoformage et le niveau de dégagement, et est également déplacé comme un tout en va-et-vient selon les flèches T1 et T2 pour alternativement placer les blocs de moule en position de thermoformage et en position d'étiquetage.

Lorsque, comme représenté, le dispositif de moule comprend en outre un troisième et un quatrième blocs de moule formant un deuxième ensemble analogue au premier, alors les quatre blocs de moule sont déplacés comme un tout selon la flèche D entre le niveau de thermoformage et le niveau de dégagement, tandis que le premier ensemble du bloc de moule 31 et 32 est également déplacé comme un tout selon le deuxième déplacement opéré en va-et-vient selon les flèches T1 et T2, et que le deuxième ensemble formé des blocs 33 et 34 est également déplacé comme un tout, en opposition de phase par rapport au déplacement du premier ensemble selon les flèches T1 et T2.

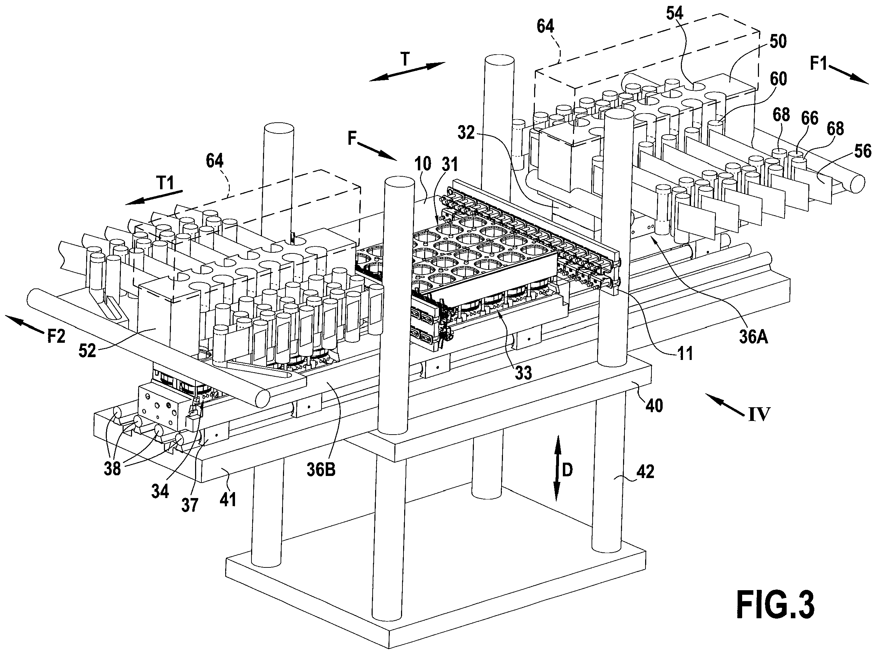

On décrit maintenant la figure 3, qui est une vue en perspective du dispositif de moule, avec les blocs d'étiquetage 50 et 52. On voit que les blocs de moule 31 à 34 sont disposés sur un support commun 40 qui est déplaçable en translation selon la double flèche D, perpendiculairement au plan de thermoformage P donc, en l'espèce, verticalement. Ce plan est matérialisé par la bande thermoplastique 10 maintenue sur ses bords par des pinces 11 qui la font avancer en pas à pas. Le déplacement selon la double flèche D peut être opéré par des moyens connus et être guidé par des colonnes de guidage 42.

Par ailleurs, les blocs de moule sont portés par le support commun 40 via des moyens de coulissement configurés pour faire coulisser les blocs dans la direction transversale T, c'est-à-dire dans le sens T1 ou le sens T2. En l'espèce, le premier et le deuxième bloc de moule 31 et 32 sont disposés sur une embase commune 36A, et les troisième et quatrième blocs de moule 33 et 34 sont disposés sur une embase commune 36B. Comme on le voit également sur la figure 3, ces embases présentent des patins de guidage 37 avec des gorges orientées selon la direction T, qui coopèrent avec des rails de guidage 38 portés par le support commun 40, éventuellement via un support allongé 41, lui-même porté par ce support. Les blocs de moule sont agencés sur le support commun pour que l'espace entre les faces des blocs de moule 31 et 32 d'une part, et 33 et 34 d'autre part, qui sont parallèles à la direction T et en vis-à-vis, soit minimisé. Ainsi, les deux blocs de moule 31 et 33 ou 32 et 34 qui sont, respectivement dans la première et dans la deuxième configurations, en regard du contre-moule, forment un bloc de moulage cohérent, avec de faibles espaces entre les chambres de thermoformage, pour éviter les pertes de matériau thermoplastique.

On décrit maintenant les blocs d'étiquetage 50 et 52. Chacun de ces blocs présente des chambres d'enroulement 54 disposées de manière analogue aux chambres de thermoformage 2 de chacun des blocs de moule. Ainsi, lorsqu'un bloc de moule est situé en regard d'un bloc d'étiquetage, les chambres d'enroulement sont en correspondance avec les chambres de thermoformage. Pour chaque bloc d'étiquetage, les chambres d'enroulement constituent ainsi des zones de préparation et de découpe d'étiquettes. Lorsque les étiquettes découpées sont mises en place dans ces zones, et qu'un bloc de moule (32 ou 33 pour le bloc d'étiquetage 50, ou bien 31 ou 34 pour le bloc d'étiquetage 52) sont placés en regard de ces zones de préparation et de découpe, les étiquettes peuvent être disposées dans les chambres de thermoformage qui sont alors en regard de ces zones.

En référence aux figures 3 à 5, on décrit maintenant schématiquement la conformation des blocs d'étiquetage, dans le cas où les étiquettes sont réalisées sous la forme de banderoles qui servent à ceinturer les corps des récipients. Comme indiqué, chaque bloc d'étiquetage comprend des chambres d'enroulement 54. Des bandelettes 56 sont amenées dans les chambres (une par chambre), en étant entraînées par des poulies d'entraînement 60 disposées à proximité des faces latérales des blocs d'étiquetage. Dans la mesure où, dans l'exemple représenté, chaque bloc de moule comprend deux rangées de chambres de thermoformage, chaque bloc d'étiquetage comprend également deux rangées de chambres d'enroulement, de sorte que les bandelettes peuvent être amenées dans les chambres d'enroulement des deux rangées, respectivement ouvertes par des fentes sur chacune des deux faces latérales opposées de chaque bloc d'étiquetage, par les poulies d'entraînement 60, respectivement adjacentes à ces deux faces latérales opposées. Les chambres d'enroulement sont ainsi aisément accessibles aux bandelettes.

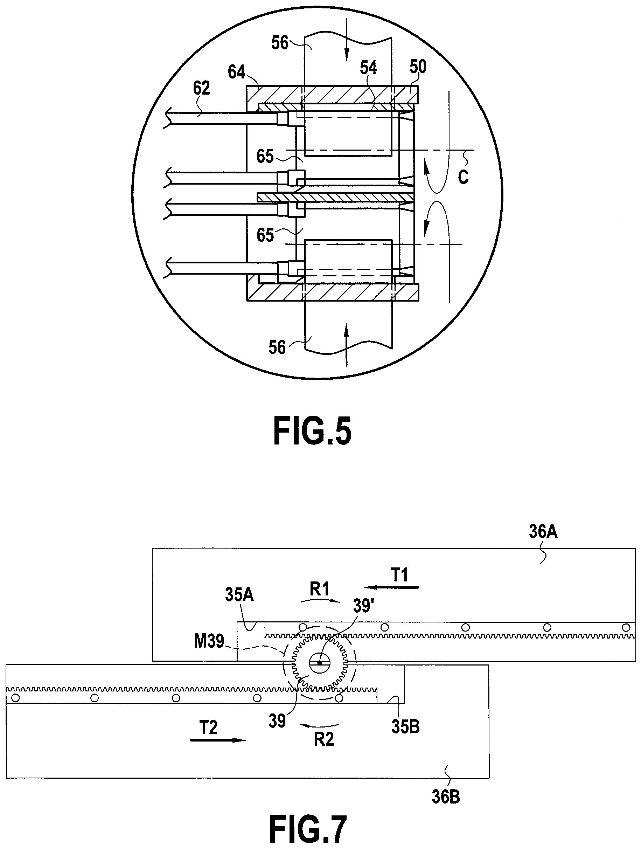

Les blocs d'étiquetage 50 et 52 sont également équipés de couteaux (non représentés) qui, lorsque les bandelettes ont été enroulées dans les chambres, découpent les bandelettes contre les faces latérales de chacun des blocs 50 et 52 (contre les bords des fentes précitées) pour que subsistent dans les chambres d'enroulement les extrémités des bandelettes découpées en banderoles. De manière connue en soi, et comme représenté sur la figure 5 pour le bloc 50, chaque bloc d'étiquetage comprend en outre des poussoirs ou analogues 62 (pouvant être disposés dans des blocs de poussée 64 indiqués en trait interrompu sur les figures 3, 4A et 4B, et déplaçables en va-et-vient verticalement pour pousser des banderoles découpées dans les chambres de thermoformage. Eventuellement, des noyaux conformateurs 65 peuvent être disposés dans les chambres d'enroulement 54, si nécessaire. De manière connue en soi, les banderoles peuvent être maintenues dans les chambres d'enroulement par une faible aspiration, qui peut cesser lorsque les poussoirs 62 repoussent ces banderoles dans les chambres de thermoformage.

Les moyens d'acheminement des bandelettes 56 vers les chambres d'enroulement 54 comprennent également des poulies de tension qui peuvent être montées folles. En l'espèce, on distingue, pour chaque chambre d'enroulement 54, une poulie principale de tension 66 et deux poulies secondaires de tension 68.

Les blocs d'étiquetage 50 et 52 se déplacent en va-et-vient parallèlement au sens d'avancement F de la bande thermoplastique, selon les flèches F1 et F2. Ils se déplacent en sens inverse l'un par rapport à l'autre, c'est-à-dire en opposition de phase. En effet, alors que le bloc 50 est disposé en regard du deuxième bloc de moule 32 sur la figure 3, ce bloc se déplacera dans le sens F1 pour venir se placer en regard du troisième bloc de moule 33 lorsque, dans la deuxième configuration, ce troisième bloc de moule occupera la position d'étiquetage. De même, alors que le deuxième bloc d'étiquetage 52 est en regard du quatrième bloc de moule 34 sur la figure 3, il se déplacera dans le sens de la flèche F2 pour venir se placer en regard du premier bloc de moule 31 lorsque celui-ci occupera sa position d'étiquetage.

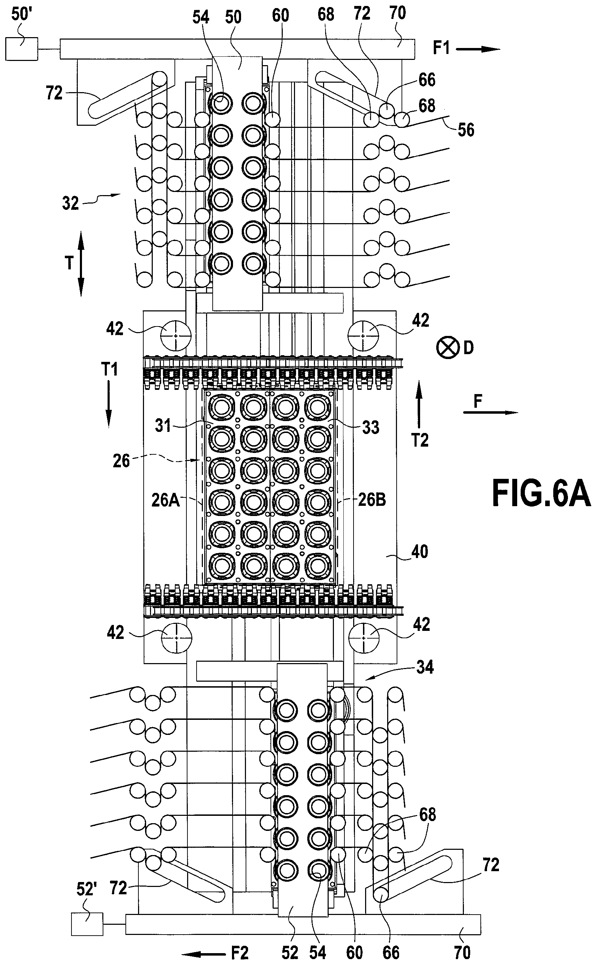

Ceci sera mieux compris sur la base des figures 6A à 6C, qui sont maintenant décrites. Pour la simplicité du dessin, on a simplement schématisé sur ses figures, les moyens de déplacement des blocs d'étiquetage, en les désignant par les références 50' et 52'. Ces moyens peuvent être de tout type connu, par exemple à poussoir ou à crémaillère.

Sur les figures 6A à 6C, on a indiqué la direction D du premier déplacement qu'opèrent ensemble tous les blocs de moule 31 à 34 entre le niveau de thermoformage et le niveau de dégagement, on a également indiqué la direction T du deuxième déplacement que réalisent ensemble les blocs de moule 31 et 32 et que réalisent par ailleurs ensemble les blocs de moule 33 et 34, et on a encore indiqué la direction F d'avancement de la bande thermoplastique dans l'installation, direction dans laquelle s'opère le troisième déplacement des blocs d'étiquetage 50 et 52, selon les sens F1 et F2. Sur ces figures, on a également repéré en trait interrompu la position du contre-moule 26, et l'on voit que les blocs d'étiquetage 50 et 52 sont disposés de part et d'autre de ce contre-moule selon la direction transversale T.

On a également repéré en trait interrompu les parties de contre-moulage 26A et 26B, bien que, comme indiqué, celles-ci puissent être formées en un seul bloc dans le contre-moule 26.

La figure 6A montre la première configuration des blocs de moule. On voit que le premier bloc de moule 31 est en position de thermoformage en regard de la première partie de contre-moulage 26A, que le deuxième bloc de moule 32 est en position d'étiquetage en regard du premier bloc d'étiquetage 50, que le troisième bloc de moule 33 est en position de thermoformage en regard de la deuxième partie de contre-moulage 26B et que le quatrième bloc de moule 34 est en position d'étiquetage en regard du deuxième bloc d'étiquetage 52. Dans cette première configuration, lorsque les blocs de moule sont au niveau de thermoformage, des récipients peuvent être thermoformés dans les chambres de thermoformage des premier et troisième blocs de moule 31 et 33 et, simultanément, des banderoles peuvent être mises en place dans les chambres de thermoformage des blocs de moule 32 et 34, respectivement par les blocs d'étiquetage 50 et 52. En effet, la mise en place des banderoles de décor dans les chambres de thermoformage s'opère en temps masqué par rapport au thermoformage, alors que les blocs de moule sont au niveau de thermoformage. Une fois le thermoformage réalisé dans les blocs de moule 31 et 33 et les banderoles mises en place dans les blocs de moule 32 et 34, l'ensemble des blocs de moule peut être descendu jusqu'au niveau de dégagement. Ceci permet alors aux récipients thermoformés d'échapper aux blocs de moule 31 et 33, de sorte que la bande de matériau thermoplastique peut avancer d'un pas.

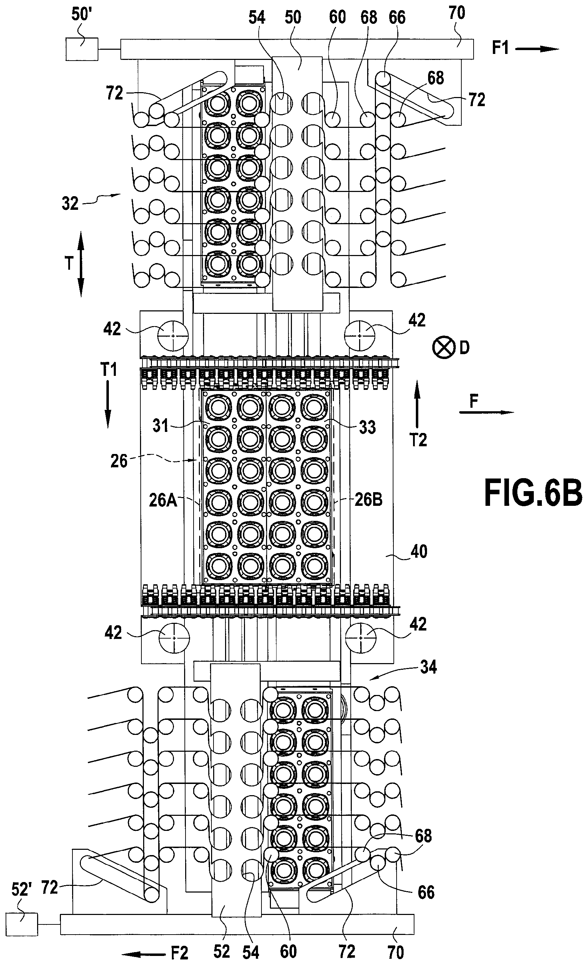

La figure 6B montre la situation au début de ce mouvement de descente des blocs de moule vers le niveau de dégagement. A ce moment, les blocs de moule 31 et 33 sont encore dans leurs positions de thermoformage, et les blocs de moule 32 et 34 sont encore dans leurs positions d'étiquetage, mais on profite du temps pris par la descente pour déplacer les blocs d'étiquetage. En effet, le bloc d'étiquetage 50 s'est déplacé dans le sens de la flèche F1 pour venir en attente au-dessus de la position qu'occupera le troisième bloc de moule 33 quand il aura été mis en position d'étiquetage, tandis que, simultanément, le deuxième bloc d'étiquetage 52 s'est déplacé dans le sens de la flèche F2 pour venir en attente au-dessus de la position qu'occupera le premier bloc de moule 31 lorsqu'il aura atteint la position d'étiquetage.

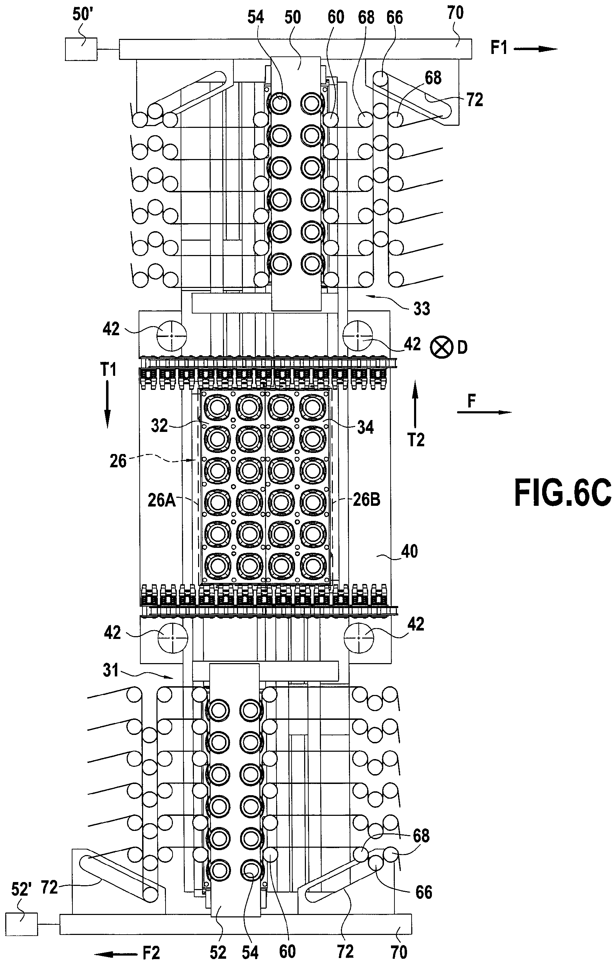

La figure 6C montre la situation une fois que les blocs de moule ont atteint le niveau de dégagement. En effet, à ce moment, les récipients qui viennent d'être thermoformés échappent aux chambres de thermoformage, et les blocs de moule peuvent donc être translatés selon la direction transversale T. On voit ainsi que les premier et deuxième blocs de moule 31 et 32 ont été déplacés dans le sens T1 pour venir respectivement occuper leurs positions d'étiquetage et de thermoformage, de même que les troisième et quatrième blocs de moule ont été déplacées dans le sens de la flèche T2 pour venir respectivement occuper leurs positions d'étiquetage et de thermoformage. Pendant cette phase de translation des blocs de moule selon le deuxième déplacement, dans les sens T1 et T2, on peut faire avancer la bande thermoplastique selon un pas d'avancement, puisque les blocs de moule sont alors au niveau de dégagement, et également préparer les banderoles dans les chambres d'enroulement des blocs d'étiquetage 50 et 52, puisque ces blocs sont déjà en place depuis la phase représentée sur la figure 6B. On travaille ainsi en temps masqué du point de vue de ces opérations et, dans la situation de deuxième configuration représentée sur la figure 6C, on est prêt à ramener les blocs de moule vers le niveau de thermoformage, pour opérer le thermoformage des récipients dans les blocs de moule 32 et 34, et la mise en place des banderoles dans les blocs de moule 31 et 33.

A l'issue de ces opérations, on opère ainsi qu'il vient d'être décrit, mais avec des sens de déplacement inversés, c'est-à-dire que :
- on amène les blocs de moule vers le niveau de dégagement tout en déplaçant les blocs d'introduction 50 et 52 respectivement dans le sens F2 pour le bloc 50 et dans le sens F1 pour le bloc 52 afin de les mettre en attente dans la position représentée sur la figure 6A ;
- on opère ensuite la translation des blocs de moule 31 et 32 dans le sens T2 et la translation des blocs de moule 33 et 34 dans le sens T1 tout en préparant les banderoles dans les blocs d'étiquetage 50 et 52 ;
- on ramène les blocs de moule au niveau de thermoformage, et on se retrouve alors dans la situation dans la figure 6A.

Ainsi qu'il a été indiqué, les moyens de commande du déplacement des blocs d'étiquetage 50 et 52 sont schématisés et désignés par les références 50' et 52'. On relève en outre que ces blocs d'étiquetage 50 et 52 sont solidaires de barres 70 portant des cames 72, par exemple formées par les bords de fentes inclinées par rapport à la direction d'avancement F de la bande. Considérées dans le plan défini par les directions F et T, ces fentes sont obliques. Comme on l'a indiqué précédemment, les banderoles sont découpées aux extrémités de bandelettes 56 acheminées dans les chambres d'enroulement 54 des blocs 50 et 52. On a également indiqué que les moyens d'entraînement des bandelettes comprennent, pour chaque chambre d'enroulement, au moins une poulie d'entraînement 60 et au moins une poulie de tension, en l'espèce une poulie principale de tension 66 et deux poulies secondaires de tension 68. En l'espèce, ces poulies ont des axes de rotation parallèles à la direction D, les plans des bandelettes étant orientés parallèlement à cette direction. Les poulies d'entrainement 60 sont des poulies motrices, et elles se déplacent avec les blocs d'étiquetage 50 et 52. En revanche, les poulies secondaires de tension 68 ne se déplacent pas lors du déplacement des blocs d'introduction, leurs axes de rotation étant stationnaires. Quant aux poulies 66, qui sont les poulies principales de tension, elles se déplacent en revanche en étant guidées dans ce déplacement par les cames 72 précédemment évoquées. Bien entendu, il suffit d'une came pour chaque rangée de poulies 66 coopérant avec les différentes bandelettes alimentant une même rangée de chambres d'enroulement. Il suffit pour cela que les axes d'entraînement de ces poulies soient reliés par une liaison commune, par exemple une barrette horizontale, et que seule une de ces poulies, en l'espèce la poulie de tête la plus éloignée du contre-moule, coopère directement avec ces cames. Les poulies de chacune des différentes rangées de poulies 66 et 68 ont leurs axes alignés verticalement, ces axes ne se déplaçant pas dans le sens d'avancement de la bande. Ainsi, lorsque le bloc d'étiquetage 50 se déplace dans le sens de la flèche F1 de la figure 6A, les poulies 66 situées du côté du bloc 50 qui est le côté avant dans ce sens de déplacement s'écartent des poulies 68 grâce aux cames 72, pour maintenir la tension des bandelettes 56 bien que le bloc d'étiquetage 50 se rapproche de ces poulies 66 et 68. A l'inverse, de l'autre côté de ce bloc, les poulies 66 se rapprochent des poulies 68 pour également maintenir la même longueur de bandelette entre ces poulies et le côté arrière du bloc 50. Le même phénomène s'applique également pour le bloc 52, et dans l'autre sens de déplacement.

On a décrit les blocs d'étiquetage dans un cas particulier où les étiquettes sont formées par des banderoles découpées aux extrémités de bandelettes de décor, et enroulées dans des chambres d'enroulement, les banderoles ainsi constituées étant mises en place dans les chambres de thermoformage pour adhérer naturellement aux parois des récipients sous l'effet du thermoformage réalisé par la suite. On pourrait cependant utiliser d'autres types d'étiquettes devant être mises en place dans les chambres de thermoformage avant le thermoformage des récipients. En particulier, il pourrait s'agir d'étiquettes destinées à être apposées seulement contre une partie de la paroi latérale des récipients, également découpées dans des bandelettes, mais conformées dans d'autres moyens que des chambres d'enroulement et, éventuellement acheminées par d'autres moyens que de simples poussoirs, ou bien encore d'étiquettes de fond, par exemple du type décrit dans la demande de brevet européen n° 2 117 809. Il doit être entendu que, comme indiqué dans cette demande de brevet européen n° 2 117 809, les étiquettes de fond peuvent par ailleurs coexister avec des banderoles.

Sur les figures 4A et 4B, on a indiqué en trait interrompu la position du contre-moule 26. On voit que les blocs d'étiquetage 50 et 52 sont placés sensiblement au même niveau que le contre-moule par rapport au plan de thermoformage P. Le niveau pourra être très légèrement différent, mais l'intérêt de ce positionnement est que la mise en place des étiquettes dans les blocs de moule peut être opérée en même temps que le thermoformage. En général, il est intéressant que les blocs d'étiquetage 50 et 52 soient placés du même côté que le contre-moule 26 par rapport au plan de thermoformage P.

On décrit maintenant la figure 7 qui est une vue schématique en section prise dans le plan VII de la figure 1. Cette section est ainsi prise dans les embases des blocs de moule 36A et 36B, au-dessus ou à côté des patins 37 servant à leur guidage en translation dans la direction transversale. Dans la section représentée sur la figure 7 se trouvent des cavités, respectivement 35A et 35B. Dans chacune de ces cavités est disposée une crémaillère, dont les dents sont tournées vers l'autre embase du bloc de moule. Un pignon moteur 39, entraîné en rotation par l'arbre 39' d'un moteur 39 (voir figure 1) est situé dans un espace ménagé par les parties de ces cavités 35A et 35B en vis-à-vis. Des dents du pignon coopèrent avec les dents des crémaillères, et on comprend que la rotation du pignon dans les sens R1 ou R2 provoquent les déplacements en translation en va-et-vient, dans les sens T1 et T2 des blocs de moule. Ceci n'est bien sûr qu'un exemple d'entraînement en va-et-vient des blocs de moule.

## Revendications

1. Dispositif pour fabriquer par thermoformage des récipients pourvus d'étiquettes de décor, le dispositif comprenant :
- un dispositif de moule (24) comprenant au moins un premier et un deuxième bloc de moule analogues (31, 32),
- un contre-moule (26),
- des moyens pour faire avancer un matériau thermoplastique (10) dans une direction d'avancement F et amener le matériau thermoplastique en regard du contre-moule (26), dans un plan de thermoformage défini par la direction d'avancement et par une direction transversale (T),
- deux blocs d'étiquetage (50, 52), le dispositif de moule étant placé de l'autre côté du plan de thermoformage par rapport au contre-moule et étant configuré pour que les blocs de moule puissent alternativement adopter une première configuration dans laquelle le premier bloc de moule (31) occupe une position de thermoformage en regard du contre-moule (26) alors que le deuxième bloc de moule (32) occupe une position d'étiquetage en regard de l'un des blocs d'étiquetage et une deuxième configuration dans laquelle le deuxième bloc de moule (32) occupe la position de thermoformage alors que le premier bloc de moule (31) occupe une position d'étiquetage en regard de l'autre des blocs d'étiquetage,
**caractérisé en ce que** les blocs d'étiquetage (50,52) sont disposés de part et d'autre du contre-moule selon la direction transversale (T) et **en ce que** les premier et deuxième blocs de moule (31, 32) forment un ensemble apte à être déplacé selon un premier déplacement (D) opéré perpendiculairement au plan de thermoformage entre un niveau de thermoformage (P) proche dudit plan et un niveau de dégagement éloigné dudit plan (P), et selon un deuxième déplacement (T1, T2) opéré dans la direction transversale (T) pour placer alternativement les blocs de moule (31, 32) en regard du contre-moule et de l'un des blocs d'étiquetage.

2. Dispositif selon la revendication 1, **caractérisé en ce que** le dispositif de moule comprend en outre un troisième et un quatrième bloc de moule analogues (33, 34) formant un ensemble parallèle à l'ensemble formé par les premier et deuxième blocs de moule, **en ce que** le contre-moule (26) présente deux parties de contre-moulage parallèles (26A, 26B) correspondant, chacune à un bloc de moule (31, 32 ; 33, 34), et **en ce que** les premier, deuxième, troisième et quatrième blocs de moule sont aptes à être déplacés ensemble selon le premier déplacement (D) et à être déplacés simultanément lors du deuxième déplacement (T1, T2), ledit deuxième déplacement étant opéré en sens inverse pour l'ensemble formé par les premier et deuxième blocs de moule (30, 32) et pour l'ensemble formé par les troisième et quatrième blocs de moule (33, 34).

3. Dispositif selon la revendication 2, **caractérisé en ce que** les blocs d'étiquetage (50, 52) sont aptes à être déplacés selon un troisième déplacement (F1, F2) parallèle à la direction d'avancement (F) en synchronisation avec les déplacements des blocs de moule (31, 32, 33, 34), de manière à être alternativement dans le prolongement de la première partie de contre-moulage (26A) et dans le prolongement de la deuxième partie de contre-moulage (26B).

4. Dispositif selon la revendication 2 ou 3, **caractérisé en ce que**, dans la première configuration des blocs de moule, le premier bloc de moule (31) est en position de thermoformage en regard de la première partie de contre-moulage (26A), le deuxième bloc de moule (32) est en position d'étiquetage en regard du premier bloc d'étiquetage (50), le troisième bloc de moule (33) est en position de thermoformage en regard de la deuxième partie de contre-moulage (26B) et le quatrième bloc de moule (34) est en position d'étiquetage en regard du deuxième bloc d'étiquetage (52), tandis que, dans la deuxième configuration des blocs de moule, le premier bloc de moule (31) est en position d'étiquetage en regard du deuxième bloc d'étiquetage (52), le deuxième bloc de moule (32) est en position de thermoformage en regard de la première partie de contre-moulage (26A), le troisième bloc de moule (33) est en position d'étiquetage en regard du premier bloc d'étiquetage (50), et le quatrième bloc de moule (34) est en position de thermoformage en regard de la deuxième partie de contre-moulage (26B).

5. Dispositif selon la revendication 3 ou 4, **caractérisé en ce qu'**il est configuré pour déplacer les blocs d'étiquetage (50, 52) selon le troisième déplacement (F1, F2) pendant le premier déplacement (D) des blocs de moule (31, 32, 33, 34) du niveau de thermoformage vers le niveau de dégagement.

6. Dispositif selon l'une quelconque des revendications 1 à 5, **caractérisé en ce que** chaque bloc de moule présente deux rangées de chambres de thermoformage (2) orientées selon la direction transversale (T) et chaque bloc d'étiquetage (50, 52) présente deux rangées correspondantes de zones de mise en place d'étiquettes (54).

7. Dispositif selon l'une quelconque des revendications 1 à 6, **caractérisé en ce qu'**il comprend un support commun déplaçable (40) en translation perpendiculairement au plan de thermoformage (F), les blocs de moule (31, 32, 33, 34) étant portés par le support commun (40) via des moyens de coulissement (36A, 36B, 38) configurés pour faire coulisser lesdits blocs dans la direction transversale (T).

8. Dispositif selon l'une quelconque des revendications 1 à 7, **caractérisé en ce que** les blocs d'étiquetage (50, 52) sont placés sensiblement au même niveau que le contre-moule (26) par rapport au plan de thermoformage (P).

9. Dispositif selon l'une quelconque des revendications 1 à 8, **caractérisé en ce que** les blocs d'étiquetage (50, 52) sont placés du même côté que le contre-moule (26) par rapport au plan de thermoformage (F).

10. Dispositif selon la revendication 3, prise en combinaison avec l'une quelconque des revendications 1 à 9, **caractérisé en ce que** chaque bloc d'étiquetage (50, 52) comprend des zones de préparation et de découpe d'étiquettes (54) pour recevoir des étiquettes découpées dans des bandelettes (56) amenées dans lesdites zones, **en ce qu'**il comprend, pour chaque bandelette (56), au moins une poulie d'entrainement (60) pour amener l'extrémité de la bandelette dans une zone de préparation et de découpe d'étiquettes et au moins une poulie de tension (66, 68) pour mettre la bandelette en tension, et **en ce qu'**il est configuré pour que, lors du déplacement du bloc d'étiquetage (50, 52) selon le troisième déplacement (F1, F2), la poulie d'entrainement (60) se déplace avec le bloc d'étiquetage, et la poulie de tension (66, 68) et la poulie d'entrainement (60) se déplacent l'une par rapport à l'autre.

11. Dispositif selon la revendication 10, **caractérisé en ce que** la poulie de tension (60) coopère avec une came (72).

12. Procédé pour fabriquer par thermoformage des récipients pourvus d'étiquettes de décor, le procédé comprenant les étapes suivantes :
- on fait avancer un matériau thermoplastique (10) dans une direction d'avancement F et on amène le matériau thermoplastique (10) en regard d'un contre-moule (26) dans un plan de thermoformage P défini par la direction d'avancement (F) et par une direction transversale (T),
- on dispose alternativement deux blocs de moule analogues (31, 32) d'un dispositif de moule (24) placé de l'autre côté du plan de thermoformage (P) par rapport au contre-moule (26), dans une première configuration dans laquelle le premier bloc de moule (31) occupe une position de thermoformage en regard du contre-moule (26) alors que le deuxième bloc de moule (32) occupe une position d'étiquetage en regard d'un bloc d'étiquetage (50), et dans une deuxième configuration dans laquelle le deuxième bloc de moule (32) occupe la position de thermoformage alors que le premier bloc de moule (31) occupe une position d'étiquetage en regard d'un autre bloc d'étiquetage (52),
**caractérisé en ce que**, les blocs d'étiquetage (50, 52) étant disposés de part et d'autre du contre-moule (26) selon la direction transversale (T), on passe de l'une à l'autre des première et deuxième configurations en déplaçant ensemble les premier et deuxième blocs de moule (31, 32) selon un premier déplacement (D) opéré perpendiculairement au plan de thermoformage (P) entre un niveau de thermoformage proche dudit plan et un niveau de dégagement éloigné dudit plan, et selon un deuxième déplacement (T1, T2) opéré dans la direction transversale (T) pour placer alternativement les blocs de moule en regard du contre-moule (26) et de l'un des blocs d'étiquetage (50, 52).

13. Procédé selon la revendication 12, **caractérisé en ce que**, le contre-moule (26) présentant deux parties de contre-moulage (26A, 28B) correspondant chacune à un bloc de moule (31, 32), on opère le premier déplacement en déplaçant les premier et deuxième blocs de moule (31, 32) ensemble avec un troisième et un quatrième bloc de moule analogues (33, 34) pour amener ensemble les quatre blocs de moule au niveau de thermoformage ou au niveau de dégagement et on opère le deuxième déplacement (T1, T2) en déplaçant ensemble les premier et deuxième blocs de moule (31, 32) dans un sens et en déplaçant ensemble les troisième et quatrième blocs de moule (33, 34) en sens inverse.

14. Procédé selon la revendication 13, **caractérisé en ce qu'**on déplace les blocs d'étiquetage (50, 52) selon un troisième déplacement (F1, F2) parallèle à la direction d'avancement (F), de sorte que chaque bloc d'étiquetage (50, 52) se trouve alternativement dans le prolongement de l'une ou de l'autre des parties de contre-moulage (26A, 26B).

15. Procédé selon la revendication 13 ou 14, **caractérisé en ce que** dans la première configuration des blocs de moule (31, 32, 33, 34), on thermoforme des récipients dans les premier et troisième blocs de moule (31, 33) en position de thermoformage respectivement en regard de la première et de la deuxième partie de contre-moulage (26A, 26B), et on met en place des étiquettes dans les deuxième et quatrième blocs de moule (32, 34) respectivement en regard du premier et du deuxième bloc d'étiquetage (50, 52), tandis que, dans la deuxième configuration des blocs de moule, on thermoforme des récipients dans les deuxième et quatrième blocs de moule (32, 34) en position de thermoformage respectivement en regard de la première et de la deuxième partie de contre-moulage (26A, 26B), et on met en place des étiquettes dans les premier et troisième blocs de moule (31, 33) respectivement en regard du deuxième et du premier bloc d'étiquetage (50, 52).

16. Procédé selon la revendication 14 ou 15, **caractérisé en ce qu'**on met en place des étiquettes dans les blocs de moule situés en regard des blocs d'étiquetage (50, 52) en même temps que l'on réalise le thermoformage dans les blocs de moules situés en regard du contre-moule (26) alors que les quatre blocs de moule sont au niveau de thermoformage, et on déplace les blocs d'étiquetage (50, 52) selon le troisième déplacement (F1, F2) pendant que l'on déplace les quatre blocs de moule selon le premier déplacement (D), du niveau de thermoformage vers le niveau de dégagement.

17. Procédé selon l'une quelconque des revendications 12 à 16, **caractérisé en ce que**, chaque bloc de moule (31, 32, 33, 34) présentant deux rangées de chambres de thermoformage (2) orientées selon la direction transversale (T) et chaque bloc d'étiquetage (50, 52) présentant deux rangées correspondantes de zones de préparation d'étiquettes (54), on réalise simultanément le thermoformage des récipients dans les chambres (2) des blocs de moule situées en regard du contre-moule (26) et la mise en place d'étiquettes dans les chambres (2) des blocs de moules situées en regard des zones de préparation d'étiquettes (54), alors que les quatre blocs de moule sont au niveau de thermoformage.

18. Procédé selon l'une quelconque des revendications 12 à 17, **caractérisé en ce qu'**on amène et on découpe des extrémités de bandelettes (56) dans des zones de préparation et de découpe d'étiquettes (54) des blocs d'étiquetage (50, 52) pour former des étiquettes dans lesdites zones (54) et **en ce que**, lors du déplacement des blocs d'étiquetage (50, 52) selon le troisième déplacement (F1, F2), on maintient la tension des bandelettes (56) à l'aide de poulies de tension (66) que l'on déplace par rapport à ces blocs.

19. Procédé selon la revendication 18, **caractérisé en ce qu'**on amène les extrémités des bandelettes (56) dans les zones de préparation et de découpe d'étiquettes de chaque bloc d'étiquetage (50, 52) en utilisant, pour chaque bandelette (56), au moins une poulie d'entrainement (60) et une poulie de tension (66, 68), et **en ce que**, lors du déplacement du bloc d'étiquetage (50, 52) selon le troisième déplacement (F1, F2), on déplace la poulie d'entrainement (60) et la poulie de tension (66, 68) l'une par rapport à l'autre.

## Patentansprüche

1. Vorrichtung zur Herstellung von Behältern durch Thermoformen, die mit Schmucketiketten versehen sind, wobei die Vorrichtung umfasst:
- eine Formvorrichtung (24), umfassend mindestens einen ersten und einen zweiten Formblock (31, 32), die analog sind,
- eine Gegenform (26),
- Mittel zum Fortbewegen eines thermoplastischen Materials (10) in einer Fortbewegungsrichtung F und Führen des thermoplastischen Materials gegenüber der Gegenform (26) in einer Thermoformebene, die von der Fortbewegungsrichtung und von einer Querrichtung (T) definiert wird,
- zwei Etikettierblöcke (50, 52),
wobei die Formvorrichtung auf die andere Seite der Thermoformebene in Bezug auf die Gegenform platziert wird und derart ausgelegt ist, dass die Formblöcke abwechselnd annehmen können: eine erste Auslegung, in welcher der erste Formblock (31) eine Thermoformposition gegenüber der Gegenform (26) einnimmt, während der zweite Formblock (32) eine Etikettierposition gegenüber einem der Etikettierblöcke einnimmt, und eine zweite Auslegung, in welcher der zweite Formblock (32) die Thermoformposition einnimmt, während der erste Formblock (31) eine Etikettierposition gegenüber dem anderen der Etikettierblöcke einnimmt,
**dadurch gekennzeichnet, dass** die Etikettierblöcke (50, 52) auf beiden Seiten der Gegenform in der Querrichtung (T) angeordnet sind, und dadurch, dass der erste und zweite Formblock (31, 32) eine Einheit bilden, die geeignet ist, verschoben zu werden gemäß einer ersten Verschiebung (D), die rechtwinklig zur Thermoformebene zwischen einer Thermoformhöhe (P) in der Nähe der Ebene und einer Lösungshöhe entfernt von der Ebene (P) vorgenommen wird, und gemäß einer zweiten Verschiebung (T1, T2), die in der Querrichtung (T) vorgenommen wird, um die Formblöcke (31, 32) abwechselnd gegenüber der Gegenform und einem der Etikettierblöcke zu platzieren.

2. Vorrichtung nach Anspruch 1, **dadurch gekennzeichnet, dass** die Formvorrichtung außerdem einen dritten und einen vierten Formblock (33, 34) umfasst, die analog sind und die eine Einheit parallel zur Einheit bilden, die von dem ersten und zweiten Formblock gebildet wird, dadurch, dass die Gegenform (26) zwei parallele Gegenformteile (26A, 26B) aufweist, die jeweils einem Formblock (31, 32; 33, 34) entsprechen, und dadurch, dass der erste, zweite, dritte und vierte Formblock geeignet sind, gemeinsam verschoben zu werden gemäß der ersten Verschiebung (D), und gleichzeitig bei der zweiten Verschiebung (T1, T2) verschoben zu werden, wobei die zweite Verschiebung in der umgekehrten Richtung für die Einheit, die von dem ersten und zweiten Formblock (30, 32) gebildet wird, und für die Einheit, die von dem dritten und vierten Formblock (33, 34) gebildet wird, vorgenommen wird.

3. Vorrichtung nach Anspruch 2, **dadurch gekennzeichnet, dass** die Etikettierblöcke (50, 52) geeignet sind, gemäß einer dritten Verschiebung (F1, F2) parallel zur Fortbewegungsrichtung (F) synchron mit den Verschiebungen der Formblöcke (31, 32, 33, 34) verschoben zu werden, um abwechselnd in der Verlängerung des ersten Gegenformteils (26A) und in der Verlängerung des zweiten Gegenformteils (26B) zu liegen.

4. Vorrichtung nach Anspruch 2 oder 3, **dadurch gekennzeichnet, dass**, in der ersten Auslegung der Formblöcke, der erste Formblock (31) in der Thermoformposition gegenüber dem ersten Gegenformteil (26A) ist, der zweite Formblock (32) in der Etikettierposition gegenüber dem ersten Etikettierblock (50) ist, der dritte Formblock (33) in der Thermoformposition gegenüber dem zweiten Gegenformteil (26B) ist, und der vierte Formblock (34) in der Etikettierposition gegenüber dem zweiten Etikettierblock (52) ist, während, in der zweiten Auslegung der Formblöcke, der erste Formblock (31) in der Etikettierposition gegenüber dem zweiten Etikettierblock (52) ist, der zweite Formblock (32) in der Thermoformposition gegenüber dem ersten Gegenformteil (26A) ist, der dritte Formblock (33) in der Etikettierposition gegenüber dem ersten Etikettierblock (50) ist, und der vierte Formblock (34) in der Thermoformposition gegenüber dem zweiten Gegenformteil (26B) ist.

5. Vorrichtung nach Anspruch 3 oder 4, **dadurch gekennzeichnet, dass** diese ausgelegt ist, die Etikettierblöcke (50, 52) gemäß einer dritten Verschiebung (F1, F2) während der ersten Verschiebung (D) der Formblöcke (31, 32, 33, 34) von der Thermoformhöhe zur Lösungshöhe zu verschieben.

6. Vorrichtung nach einem der Ansprüche 1 bis 5, **dadurch gekennzeichnet, dass** jeder Formblock zwei Reihen von Thermoformkammern (2) aufweist, die in der Querrichtung (T) ausgerichtet sind, und jeder Etikettierblock (50, 52) zwei entsprechende Reihen von Etikettenplatzierungszonen (54) aufweist.

7. Vorrichtung nach einem der Ansprüche 1 bis 6, **dadurch gekennzeichnet, dass** diese einen gemeinsamen Träger (40) umfasst, der translatorisch rechtwinklig zur Thermoformebene (F) verschiebbar ist, wobei die Formblöcke (31, 32, 33, 34) von dem gemeinsamen Träger (40) über Gleitmittel (36A, 36B, 38) getragen werden, die ausgelegt sind, die Blöcke in der Querrichtung (T) gleiten zu lassen.

8. Vorrichtung nach einem der Ansprüche 1 bis 7, **dadurch gekennzeichnet, dass** die Etikettierblöcke (50, 52) im Wesentlichen auf derselben Höhe platziert sind wie die Gegenform (26) in Bezug auf die Thermoformebene (P).

9. Vorrichtung nach einem der Ansprüche 1 bis 8, **dadurch gekennzeichnet, dass** die Etikettierblöcke (50, 52) auf derselben Seite platziert sind wie die Gegenform (26) in Bezug auf die Thermoformebene (P).

10. Vorrichtung nach Anspruch 3, in Kombination mit einem der Ansprüche 1 bis 9, **dadurch gekennzeichnet, dass** jeder Etikettierblock (50, 52) Zonen zum Vorbereiten und zum Schneiden von Etiketten (54) umfasst, um die geschnittenen Etiketten in Streifen (56) aufzunehmen, die in die Zonen geführt werden, dadurch, dass diese, für jeden Streifen (56), umfasst: mindestens ein Antriebsrad (60), um das Ende des Streifens in eine Zone zum Vorbereiten und zum Scheiden von Etiketten zu führen, und mindestens eine Spannrolle (66, 68), um den Streifen unter Spannung zu setzen, und dadurch, dass diese derart ausgelegt ist, dass, während der Verschiebung des Etikettierblocks (50, 52) gemäß der dritten Verschiebung (F1, F2), sich das Antriebsrad (60) mit dem Etikettierblock verschiebt, und sich die Spannrolle (66, 68) und das Antriebsrad (60) in Bezug aufeinander verschieben.

11. Vorrichtung nach Anspruch 10, **dadurch gekennzeichnet, dass** die Spannrolle (66, 68) mit einem Nocken (72) zusammenwirkt.

12. Verfahren zur Herstellung von Behältern durch Thermoformen, die mit Schmucketiketten versehen sind, wobei das Verfahren die folgenden Schritte umfasst:
- Fortbewegen eines thermoplastischen Materials (10) in einer Fortbewegungsrichtung F und Führen des thermoplastischen Materials (10) gegenüber einer Gegenform (26) in einer Thermoformebene P, die von der Fortbewegungsrichtung (F) und von einer Querrichtung (T) definiert wird,
- abwechselndes Anordnen von zwei analogen Formblöcken (31, 32) einer Formvorrichtung (24), die auf die andere Seite der Thermoformebene (P) in Bezug auf die Gegenform (26) platziert wird, in einer ersten Auslegung, in welcher der erste Formblock (31) eine Thermoformposition gegenüber der Gegenform (26) einnimmt, während der zweite Formblock (32) eine Etikettierposition gegenüber einem Etikettierblock (50) einnimmt, und in einer zweiten Auslegung, in welcher der zweite Formblock (32) die Thermoformposition einnimmt, während der erste Formblock (31) eine Etikettierposition gegenüber einem anderen Etikettierblock (52) einnimmt,
**dadurch gekennzeichnet, dass**, da die Etikettierblöcke (50, 52) auf beiden Seiten der Gegenform (26) in der Querrichtung (T) angeordnet werden, von der einen in die andere von der ersten und zweiten Auslegung übergegangen wird, indem der erste und zweite Formblock (31, 32) gemeinsam verschoben werden gemäß einer ersten Verschiebung (D), die rechtwinklig zur Thermoformebene (P) zwischen einer Thermoformhöhe in der Nähe der Ebene und einer Lösungshöhe entfernt von der Ebene (P) vorgenommen wird, und gemäß einer zweiten Verschiebung (T1, T2), die in der Querrichtung (T) vorgenommen wird, um die Formblöcke (31, 32) abwechselnd gegenüber der Gegenform (26) und einem der Etikettierblöcke (50, 52) zu platzieren.

13. Verfahren nach Anspruch 12, **dadurch gekennzeichnet, dass**, da die Gegenform (26) zwei Gegenformteile (26A, 26B) aufweist, die jeweils einem Formblock (31, 32) entsprechen, die erste Verschiebung vorgenommen wird, indem der erste und zweite Formblock (31, 32) gemeinsam mit einem dritten und vierten Formblock (33, 34), die analog sind, verschoben werden, um gemeinsam die vier Formblöcke auf die Höhe des Thermoformens oder auf die Höhe des Lösens zu führen, und die zweite Verschiebung (T1, T2) vorgenommen wird, indem gemeinsam der erste und zweite Formblock (31, 32) in einer Richtung verschoben werden, und indem gemeinsam der dritte und vierte Formblock (33, 34) in der umgekehrten Richtung verschoben werden.

14. Verfahren nach Anspruch 13, **dadurch gekennzeichnet, dass** die Etikettierblöcke (50, 52) gemäß einer dritten Verschiebung (F1, F2) parallel zur Fortbewegungsrichtung (F) derart verschoben werden, dass sich jeder Etikettierblock (50, 52) abwechselnd in der Verlängerung des einen oder des anderen der Gegenformteile (26A, 26B) befindet.

15. Verfahren nach Anspruch 13 oder 14, **dadurch gekennzeichnet, dass**, in der ersten Auslegung der Formblöcke (31, 32, 33, 34), die Behälter in dem ersten und dritten Formblock (31, 33) in der Thermoformposition jeweils gegenüber dem ersten und dem zweiten Gegenformteil (26A, 26B) thermogeformt werden, und Etiketten in dem zweiten und vierten Formblock (32, 34) jeweils gegenüber dem ersten und dem zweiten Etikettierblock (50, 52) platziert werden, während, in der zweiten Auslegung der Formblöcke, die Behälter in dem zweiten und vierten Formblock (32, 34) in der Thermoformposition jeweils gegenüber dem ersten und dem zweiten Gegenformteil (26A, 26B) thermogeformt werden, und Etiketten in dem ersten und dritten Formblock (31, 33) jeweils gegenüber dem zweiten und dem ersten Etikettierblock (50, 52) platziert werden.

16. Verfahren nach Anspruch 14 oder 15, **dadurch gekennzeichnet, dass** Etiketten in den Formblöcken platziert werden, die gegenüber den Etikettierblöcken (50, 52) angeordnet sind, gleichzeitig mit der Durchführung des Thermoformens in den Formblöcken, die gegenüber der Gegenform (26) angeordnet sind, während die vier Formblöcke auf der Thermoformhöhe sind, und die Etikettierblöcke (50, 52) gemäß der dritten Verschiebung (F1, F2) verschoben werden, während die vier Formblöcke gemäß der ersten Verschiebung (D) von der Thermoformhöhe zur Lösungshöhe verschoben werden.

17. Verfahren nach einem der Ansprüche 12 bis 16, **dadurch gekennzeichnet, dass**, da jeder Formblock (31, 32, 33, 34) zwei Reihen von Thermoformkammern (2) aufweist, die in der Querrichtung (T) ausgerichtet sind, und jeder Etikettierblock (50, 52) zwei entsprechende Reihen von Etikettenvorbereitungszonen (54) aufweist, gleichzeitig das Thermoformen der Behälter in den Kammern (2) der Formblöcke, die gegenüber der Gegenform (26) angeordnet sind, und das Platzieren von Etiketten in den Kammern (2) der Formblöcke, die gegenüber den Etikettenvorbereitungszonen (54) angeordnet sind, vorgenommen werden, während die vier Formblöcke auf der Thermoformhöhe sind.

18. Verfahren nach einem der Ansprüche 12 bis 17, **dadurch gekennzeichnet, dass** die Enden der Streifen (56) in Zonen (54) zum Vorbereiten und Schneiden von Etiketten der Etikettierblöcke (50, 52) geführt und abgeschnitten werden, um Etiketten in den Zonen (54) zu bilden, und dadurch, dass, bei der Verschiebung der Etikettierblöcke (50, 52) gemäß der dritten Verschiebung (F1, F2), die Spannung der Streifen (56) mit Hilfe von Spannrollen (66) gehalten wird, die in Bezug auf diese Blöcke verschoben werden.

19. Verfahren nach Anspruch 18, **dadurch gekennzeichnet, dass** die Enden der Streifen (56) in die Zonen zum Vorbereiten und zum Schneiden der Etiketten jedes Etikettierblocks (50, 52) geführt werden, indem, für jeden Streifen (56), mindestens ein Antriebsrad (60) und eine Spannrolle (66, 68) verwendet werden, und dadurch, dass, bei der Verschiebung des Etikettierblocks (50, 52) gemäß der dritten Verschiebung (F1, F2), das Antriebsrad (60) und die Spannrolle (66, 68) in Bezug aufeinander verschoben werden.

## Claims

1. A device for manufacturing, by thermoforming, containers provided with decorative labels, the device comprising:
• a mold device (24) comprising at least first and second analogous mold blocks (31, 32);
• a counter-mold (26);
• means for causing a thermoplastic material (10) to advance along an advance axis F and for bringing the thermoplastic material to face the counter-mold (26) in a thermoforming plane defined by the advance axis and by a transverse axis (T); and
• two labeling blocks (50, 52);
the mold device being placed on the other side of the thermoforming plane relative to the counter mold, and being configured so that the mold blocks can, in succession, take up a first configuration in which the first mold block (31) is in a thermoforming position facing the counter-mold (26) while the second mold block (32) is in a labeling position facing one of the labeling blocks, and a second configuration in which the second mold block (32) is in the thermoforming position, while the first mold block (31) is in a labeling position facing the other of the labeling blocks;
said device being **characterized in that** the labeling blocks (50, 52) are disposed on either side of the counter-mold along the transverse axis (T), and **in that** the first and second mold blocks (31, 32) form a set suitable for being moved in a first movement (D) perpendicularly to the thermoforming plane between a thermoforming level (P) close to said plane and a disengagement level spaced apart from said plane (P), and in a second movement (T1, T2) along the transverse axis (T) so as to place the mold blocks (31, 32) facing in succession the counter-mold and one of the labeling blocks.

2. A device according to claim 1, **characterized in that** the mold device further comprises third and fourth analogous mold blocks (33, 34) forming a set parallel to the set formed by the first and second mold blocks, **in that** the counter-mold (26) has two parallel counter-mold portions (26A, 26B), each of which corresponds to a mold block (31, 32; 33, 34), and **in that** the first, second, third, and fourth mold blocks are suitable for being moved together in the first movement (D) and for being moved simultaneously during the second movement (T1, T2), said second movement being made in opposite directions for the set formed by the first and second mold blocks (30, 32) and for the set formed by the third and fourth mold blocks (33, 34).

3. A device according to claim 2, **characterized in that** the labeling blocks (50, 52) are suitable for being moved in a third movement (F1, F2) parallel to the advance axis (F) in synchronization with the movements of the mold blocks (31, 32, 33, 34), in such a manner as to be alternately in alignment with the first counter-mold portion (26A) and in alignment with the second counter-mold portion (26B).

4. A device according to claim 2 or claim 3, **characterized in that**, when the mold blocks are in the first configuration, the first mold block (31) is in the thermoforming position facing the first counter-mold portion (26A), the second mold block (32) is in the labeling position facing the first labeling block (50), the third mold block (33) is in the thermoforming position facing the second counter-mold portion (26B) and the fourth mold block (34) is in the labeling position facing the second labeling block (52), while, when the mold blocks are in the second configuration, the first mold block (31) is in the labeling position facing the second labeling block (52), the second mold block (32) is in the thermoforming position facing the first counter-mold portion (26A), the third mold block (33) is in the labeling position facing the first labeling block (50), and the fourth mold block (34) is in the thermoforming position facing the second counter-mold portion (26B).

5. A device according to claim 3 or claim 4, **characterized in that** it is configured to move the labeling blocks (50, 52) in the third movement (F1, F2) during the first movement (D) of the mold blocks (31, 32, 33, 34) from the thermoforming level to the disengagement level.

6. A device according to any one of claims 1 to 5, **characterized in that** each mold block has two rows of thermoforming chambers (2) extending along the transverse axis (T), and each labeling block (50, 52) has two corresponding rows of zones (54) for putting labels in place.

7. A device according to any one of claims 1 to 6, **characterized in that** it further comprises a common support (40) mounted to move in translation perpendicularly to the thermoforming plane (F), the mold blocks (31, 32, 33, 34) being carried by the common support (40) via slide means (36A, 36B, 38) configured to cause said blocks to slide along the transverse axis (T).

8. A device according to any one of claims 1 to 7, **characterized in that** the labeling blocks (50, 52) are placed substantially at the same level as the counter-mold (26) relative to the thermoforming plane (P).

9. A device according to any one of claims 1 to 8, **characterized in that** the labeling blocks (50, 52) are placed substantially on the same side as the counter-mold (26) relative to the thermoforming plane (F).

10. A device according to claim 3, taken in combination with any one of claims 1 to 9, **characterized in that** each labeling block (50, 52) comprises label preparation and cutting zones (54) for receiving labels cut off from strips (56) brought into said zones, **in that**, for each strip (56), the device further comprises at least one drive pulley (60) for bringing the end of the strip into a label preparation and cutting zone, and at least one tension pulley (66, 68) for putting the strip under tension, and **in that** the device is configured so that, while the labeling block (50, 52) is moving in the third movement (F1, F2), the drive pulley (60) moves with the labeling block, and the tension pulley (66, 68) and the drive pulley (60) move relative to each other.

11. A device according to claim 10, **characterized in that** the tension pulley (60) co-operates with a cam (72).

12. A method of manufacturing, by thermoforming, containers provided with decorative labels, the method comprising the following steps:
• causing a thermoplastic material (10) to advance along an advance axis F, and bringing the thermoplastic material (10) to face a counter-mold (26) in a thermoforming plane P defined by the advance axis (F) and by a transverse axis (T);
• causing two analogous mold blocks (31, 32) of a mold device (24) placed on the other side of the thermoforming plane (P) relative to the counter mold (P) to be placed, in succession, in a first configuration in which the first mold block (31) is in a thermoforming position facing the counter-mold (26) while the second mold block (32) is in a labeling position facing a labeling block (50), and in a second configuration in which the second mold block (32) is in the thermoforming position, while the first mold block (31) is in a labeling position facing another labeling block (52);
said method being **characterized in that**, with the labeling blocks (50, 52) being disposed on either side of the counter-mold (26) along the transverse axis (T), going from one of the first and second configurations to the other is achieved by moving the first and second mold blocks (31, 32) together in a first movement (D) perpendicularly to the thermoforming plane between a thermoforming level (P) close to said plane and a disengagement level spaced apart from said plane, and in a second movement (T1, T2) along the transverse axis (T) so as to place the mold blocks facing in succession the counter-mold (26) and one of the labeling blocks (50, 52) .

13. A method according to claim 12, **characterized in that**, with the counter-mold (26) having two counter-mold portions (26A, 28B), each of which corresponds to a respective mold block (31, 32), the first movement is made by moving the first and second mold blocks (31, 32) together with third and fourth analogous mold blocks (33, 34) to bring all four mold blocks together to the thermoforming level or to the disengagement level, and the second movement (T1, T2) is made by moving the first and second mold blocks (31, 32) together in one direction and by moving the third and fourth mold blocks (33, 34) together in the opposite direction.

14. A method according to claim 13, **characterized in that** the labeling blocks (50, 52) are moved in a third movement (F1, F2) parallel to the advance axis (F), so that each labeling block (50, 52) finds itself, in succession, in alignment with one or the other of the counter-mold portions (26A, 26B).

15. A method according to claim 13 or claim 14, **characterized in that**, when the mold blocks (31, 32, 33, 34) are in the first configuration, containers are thermoformed in the first and third mold blocks (31, 33) in the thermoforming position facing respective ones of the first and second counter-mold portions (26A, 26B), and labels are put in place in the second and fourth mold blocks (32, 34) facing respective ones of the first and second labeling blocks (50, 52), while, when the mold blocks are in the second configuration, containers are thermoformed in the second and fourth mold blocks (32, 34) in the thermoforming position facing respective ones of the first and second counter-mold portions (26A, 26B), and labels are put in place in the first and third mold blocks (31, 33) facing respective ones of the second and first labeling blocks (50, 52).

16. A method according to claim 14 or claim 15, **characterized in that** labels are put in place in the mold blocks situated facing the labeling blocks (50, 52) at the same time as the thermoforming is being performed in the mold blocks situated facing the counter-mold (26) while all four mold blocks are at the thermoforming level, and the labeling blocks (50, 52) are moved in the third movement (F1, F2) while the four mold blocks are being moved in the first movement (D), from the thermoforming level towards the disengagement level.

17. A method according to any one of claims 12 to 16, **characterized in that**, with each mold block (31, 32, 33, 34) having two rows of thermoforming chambers (2) extending along the transverse axis (T), and with each labeling block (50, 52) having two corresponding rows of label preparation zones (54), the thermoforming of the containers in the chambers (2) of the mold blocks situated facing the counter-mold (26) is performed simultaneously with putting labels in place in the chambers (2) of the mold blocks situated facing the label preparation zones (54), while the four mold blocks are at the thermoforming level.

18. A method according to any one of claims 12 to 17, **characterized in that** the ends of strips (56) are brought to and cut off in label preparation and cutting zones (54) of the labeling blocks (50, 52) so as to form labels in said zones (54), and **in that**, while the labeling blocks (50, 52) are moving in the third movement (F1, F2), the tension of the strips (56) is maintained by means of tension pulleys (66) that are moved relative to said blocks.

19. A method according to claim 18, **characterized in that** the ends of the strips (56) are brought to the label preparation and cutting zones of each labeling block (50, 52) by using, for each strip (56), at least one drive pulley (60) and at least one tension pulley (66, 68), and **in that**, while the labeling block (50, 52) is being moved in the third movement (F1, F2), the drive pulley (60) and the tension pulley (66, 68) are moved relative to each other.
